**Europäisches Patentamt**

**European Patent Office**

**Office européen des brevets**

(19)

(11) Veröffentlichungsnummer: **0 143 108**
**B1**

(12) # EUROPÄISCHE PATENTSCHRIFT

(45) Veröffentlichungstag der Patentschrift: **17.05.89**

(51) Int. Cl.⁴: **A 01 D 41/12, B 65 G 65/46**

(21) Anmeldenummer: **83111398.0**

(22) Anmeldetag: **15.11.83**

(54) **Fördervorrichtung für den Sammelbehälter einer Erntebergungsmaschine.**

(43) Veröffentlichungstag der Anmeldung:
**05.06.85 Patentblatt 85/23**

(45) Bekanntmachung des Hinweises auf die
Patenterteilung:
**17.05.89 Patentblatt 89/20**

(84) Benannte Vertragsstaaten:
**BE DE FR GB IT SE**

(56) Entgegenhaltungen:
**EP-A-0 009 134**
**BE-A- 669 961**
**BE-A- 757 359**
**BE-A- 841 281**
**DE-A-2 455 246**
**FR-A-2 157 303**
**FR-A-2 355 747**
**US-A-3 650 052**

(73) Patentinhaber: **DEERE & COMPANY**
**1 John Deere Road**
**Moline Illinois 61265 (US)**

(72) Erfinder: **Brengel, Jürgen, Dipl.-Ing.**
**Talstrasse 36**
**D-6650 Homburg (DE)**
Erfinder: **Lenski, Ralph, Dipl.-Ing.**
**Dunantstrasse 10**
**D-6660 Zweibrücken (DE)**
Erfinder: **Pauli, Klaus H., Dipl.-Ing.**
**Kantstrasse 12**
**D-6650 Homburg (DE)**

(74) Vertreter: **Feldmann, Bernhard et al**
**DEERE & COMPANY European Office, Patent**
**Department Steubenstrasse 36-42 Postfach 503**
**D-6800 Mannheim 1 (DE)**

**Beschreibung**

Die Erfindung bezieht sich auf eine Fördervorrichtung für den Sammelbehälterner einer Erntebergungsmaschine, insebsondere Mähdrescher, mit mehreren mittels einer Antriebsvorrichtung antreibbaren, unmittelbar über dem Boden des Sammelbehälters angeordneten Förderschnecken, von denen zumindest zwei Förderschnecken parallel zueinander verlaufen und mindestens eine Förderschnecke quer zu den parallel verlaufenden Förderschnecken angeordnet und mit einer der parallel verlaufenden Förderschnecken über ein Getriebegehäuse antriebsverbunden ist.

Bei dieser bekannten Fördervorrichtung (FR—U—2 157 303) sind die parallel verlaufenden Förderschnecken an einem Ende aus dem Sammelbehälter geführt und dort mit je einem Kettenantrieb versehen, die zudem gegenläufig arbeiten. Hinzu kommt, daß die quer verlaufende Förderschnecke einenends vor einer der parallel verlaufenden Förderschnecken auf einem höheren Niveau endet, so daß im Sammelbehälter noch eine zusätzliche Lagerstelle vorgesehen werden muß.

Die mit der Erfindung zu lösende Aufgabe wird darin gesehen, die Fördervorrichtung zum Antrieb der einzelnen Förderschnecken derart auszubilden und anzuordnen, daß mit einem Minimum an Antriebselementen und Bauteilen zur Lagerung der Förderschnecken ausgekommen werden kann.

Diese Aufgabe ist gemäß der Erfindung dadurch gelöst worden, daß jede einzelne der parallel verlaufenden Förderschnecken endseitig über Kegelräder mit der quer verlaufenden Förderschnecke antriebsverbunden ist und sich über je ein Getriebegehäuse auf der quer verlaufenden Förderschnecke abstützt, wobei die Getriebegehäuse auf der quer verlaufenden Förderschneckengeordnet sein können und nur eine der Förderschnecken mit daer Antriebsvorrichtung versehen ist. Durch diese vorteilhafte Ausbildung der Fördervorrichtung wird nur ein einziger Fremdantrieb benötigt, da der Antrieb aller Förderschnecken von einer einzigen Antriebsstelle aus möglich ist. Bei Ausfall eines Elements werden Folgeschäden erheblich eingeschränkt. Fällt z. B. das der Antriebsstelle am nächsten liegende Getriebe aus, wird nur noch der Schneckenteil zwischen Antriebsstelle und Getriebe angetrieben. Die anderen Förderschnecken fördern nicht mehr und können somit nicht durch Stauungen des Ernteguts beschädigt werden.

Zweckmäßig können die parallel zueinander verlaufenden Förderschnecken in Mulden des Bodens des Sammelbehälters aufgenommen sein, wobei die quer verlaufende Förderschnecke jeweils endseitig in den Seitenwänden gelagert und mit einer weiteren Entleerungsvorrichtung antriebsverbindbar sein kann.

Vorteilhaft kann die mit der Entleerungsvorrichtung verbundene Förderschnecke zur Aufnahme der Getriebegehäuse geteilt oder einstückig ausgebildet sein.

Nach einem weiteren Vorschlag der Erfindung weist die mit der Entleerungsvorrichtung verbundene Förderschnecke eine Antriebsscheibe zum Antrieb aller Förderschnecken und der Entleerungsvorrichtung auf, wobei das Getriebegehäuse aus zwei zusammenfügbaren Gehäuseteilen gebildet ist und zumindest ein Gehäuseteil über Streben mit dem Boden bzw. den Wänden des Sammelbehälters lösbar verbunden ist.

In der Zeichnung sind zwei Ausführungsbeispiele einer Fördervorrichtung und deren Antriebsorgane für den Sammelbehälter eines Mähdreschers nach der Erfindung schematisch dargestellt. Es zeigt:

Fig. 1 eine perspektivische Darstellung eines Mähdreschers,

Fig. 2 eine perspektivische Teilansicht des Sammelbehälters des Mähdreschers der zugehörigen Fördervorrichtung und einer Antriebsvorrichtung, wobei die Seitenwände und die Vorderwand weggelassen sind,

Fig. 3 eine Draufsicht des Sammelbehälters gemäß Fig. 2 mit einer etwas anders gestalteten Antriebsvorichtung zum Antrieb der Fördervorrichtung im Sammelbehälter des Mähdreschers.

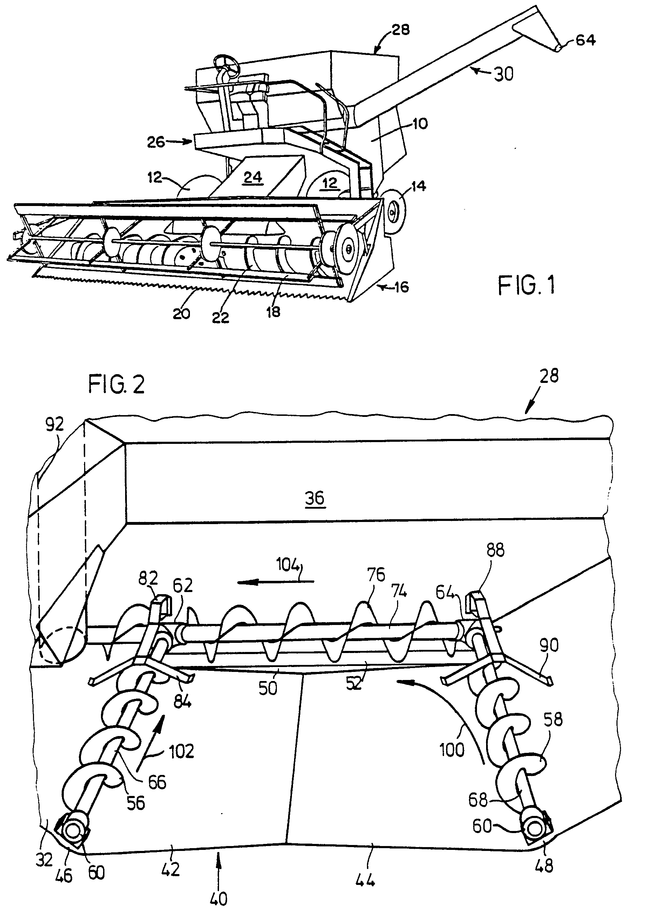

In der Zeichnung ist in Fig. 1 mit 10 ein Mähdrescher bezeichnet, der mit Vorderrädern 12 und Hinterrädern 14 ausgerüstet ist. Im vorderen Bereich des Mähdreschers 10 befindet sich eine Erntebergungsvorrichtung 16, die aus einer Haspel 18, einem Schneidwerk 20 sowie einer Einzugsschnecke 22 besteht und die an ein vertikal verschwenkbares Schrägfördergehäuse 24 angeschlossen ist. Das Erntegut wird über die Erntebergungsvorrichtung 16 sowie das Schrägfördergehäuse 24 einer in der Zeichnung nicht dargestellten Dreschtrommel zugeführt. Im vorderen Bereich des Mähdreschers 10 befindet sich eine Fahrerplattform 26 und hinter dieser ein Sammelbehälter 28 mit einer Entleerungsvorrichtung 30, die am unteren Ende des Sammelbehälters angeschlossen ist und über eine (Fig. 2) quer verlaufende Förderschnecke 76 beschickt werden kann.

Der Sammelbehälter 28 besteht aus zwei in Fahrtrichtung sich erstreckenden Seitenwänden 32 und 34 sowie einer Vorderwand 36 und einer Rückwand 38. Wie insbesondere aus Fig. 2 hervorgeht, weist der Sammelbehälter einen Boden 40 auf, der aus zwei schräg verlaufenden, dachförmig zueinander angeordneten Bodenteilen 42 und 44 gebildet ist, die im Bereich der Seitenwand 32 bzw. 34 jeweils in eine Mulde 46 und 48 übergehen und die an die entsprechende Seitenwand 32 bzw. 34 angeschlossen sind. Die beiden Bodenteile 42 und 44 stoßen ebenfalls an einen quer verlaufenden, ebenfalls geneigt verlaufenden Bodenteil 50, der ebenfalls in eine Mulde 52 übergeht, die an die Vorderwand 36 anstößt.

Wie insbesondere aus Fig. 2 hervorgeht, sind in den Mulden 46 und 48 parallel zueinander verlaufende Förderschnecken 56 und 58 angeordnet, die einenends in Lagern 60 drehbar aufgenommen sind und anderenends in einem Getriebegehäuse 62 bzw. 64 lagern. Die Lager 60 zur Aufnahme von Wellen 66 und 68 der Förderschnecken 56 bzw. 58 können als Gleitlager bzw. als Wälzlager ausgebildet sein, die in der Rückwand 38 aufgenommen sind.

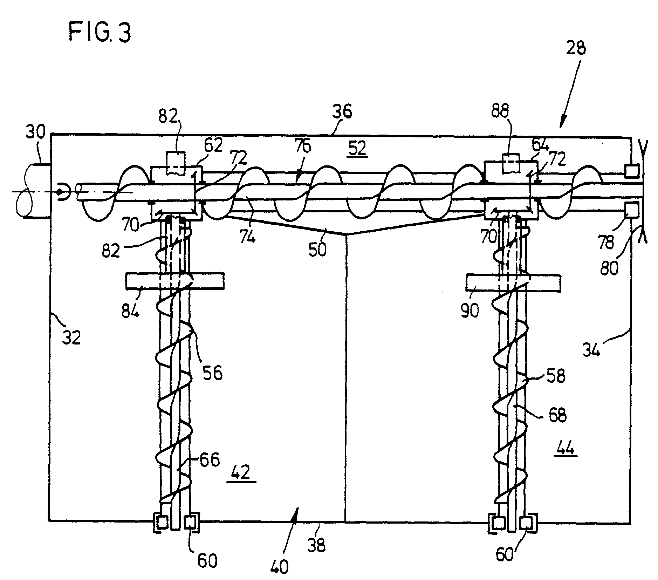

Das Getriebegehäuse 62 bzw. 64, das in Fig. 3 lediglich schematisch angedeutet ist, kann aus zwei lösbar miteinander verbundenen Gehäuseteilen bestehen, in denen jeweils ein Paar Kegelräder 70 und 72 angeordnet ist. Das Kegelrad 70 des mit Bezug auf die Zeichnung linken Getriebegehäuses 62 ist am Ende der Welle 66 angeordnet und steht mit dem Kegelrad 72 in Eingriff, das im Bereich des Endes einer weiteren quer verlaufenden Welle 74 einer Förderschnecke 76 angeordnet ist. Wie aus Fig. 2 bzw. 3 hervorgeht, erstreckt sich die Förderschnekke 76 dicht über der Mulde 52 und wird über die beiden sich in Fahrtrichtung erstreckenden Förderschnecken 56 und 58 mit Erntegut beschickt. Das im rechten Getriebegehäuse 64 angeordnete Kegelrad 72 ist auf die Welle 74 aufgeschoben und steht mit dem Kegelrad 70 der Welle 68 in Antriebsverbindung.

Die Welle 74 ist über das Kegelrad 72 hinaus verlängert und in einem in der Seitenwand 34 angeordneten Lager 78 drehbar aufgenommen. An dem aus der Seitenwand 34 herausragenden Ende der Welle 74 befindet sich eine Antriebsvorrichtung 80 in Form einer Antriebsscheibe, die als Zugmittelscheibe ausgebildet sein kann und über entsprechende Zugmitteltriebe mit einer in der Zeichnung nicht dargestellten Verbrennungskraftmaschine des Mähdreschers 10 antriebsverbunden ist. Wie aus Fig. 2 und 3 hervorgeht, ist das linke Getriebegehäuse 62 an eine Strebe 82 angeschlossen, die einenends mit der Vorderwand 36, anderenends mit einem Bügel 84 fest verbunden ist, der sich auf dem Boden 40 abstützt und dabei die Förderschnecke 56 gabelförmig umgibt. Das rechte Getriebegehäuse 64 ist auf gleiche Weise über eine Strebe 88 und einen Bügel 90 abgestützt. Die Bügel 84 und 90 können in vorteilhafter Weise zusätzlich zur Aufnahme von in der Zeichnung nicht dargestellten Abdeckblechen dienen.

Durch die Verwendung des Getriebegehäuses 62 bzw. 64 mit den zugehörigen Kegelrädern 70 und 72 erhält man somit eine vorteilhafte Antriebsverbindung zwischen den sich in Fahrtrichtung erstreckenden Förderschnecken 56 und 58 mit der quer verlaufenden Förderschnecke 76. Außerdem kann das Getriebegehäuse 62, 64 gleichzeitig zur Abstützung der entsprechenden Enden der Wellen 66 und 68 und zur Lagerung der Welle 74 dienen, so daß die Abstützung der Welle 74 in den Seitenwänden 32, 34 nicht notwendig ist. Hierdurch kann neben der einfach gestalteten Antriebsverbindung der einzelnen Wellen 66, 68 und 74 eine vorteilhafte, kostengünstige Abstützung aller Arbeitsorgane erreicht werden.

Durch Antrieb der Zugmittelscheibe werden also die Förderschnecke 76 und somit die beiden Förderschnecken 56 und 58 angetrieben, die zum Entleeren des Sammelbehälters 28 dienen und das Erntegut der quer verlaufenden Förderschnecke 76 zuführen, die zur Beschickung einer in der Zeichnung nicht dargestellten Förderschnecke der Entleerungsvorrichtung 30 dient. Die in Fig. 1 dargestellte Entleerungsvorrichtung 30, die am unteren Ende des Sammelbehälters 28 vorgesehen sein kann, läßt sich auch im oberen Bereich des Sammelbehälters 28 vorsehen. Hierzu muß die entsprechende Entleerungsvorrichtung über einen Vertikalförderer 92 beschickt werden (Fig. 2), der mit einer Förderschnecke ausgerüstet sein kann, die ebenfalls über die Welle 74 angetrieben wird. Hierzu kann die in der Zeichnung nicht dargestellte Förderschnecke des Vertikalförderers 92 über ebenfalls nicht dargestellte Kegelräder mit der Welle 74 antriebsverbunden sein. Auf diese Weise lassen sich sämtliche Wellen im Sammelbehälter 28 über eine einzige Antriebsvorrichtung antreiben. Je nach Plazierung des Vertikalförderers 92 ist es jedoch auch möglich, die Antriebsverbindung zwischen der Förderschnecke 76 und der Förderschnecke des Vertikalförderers 92 über ein Kettengetriebe zu ermöglichen. Der Antrieb der Welle 74 gemäß Fig. 2 erfolgt ähnlich wie in Fig. 3 über eine nicht dargestellte Keilriemenscheibe, die am linken Ende der Welle 74 vorgesehen sein kann.

Hierzu ist in Fig. 2, abweichend von Fig. 3, die Welle 74 durch die linke Seitenwand 32 geführt. Beim Entleerungsvorgang wird das Erntegut gemäß Pfeilrichtung 100 und 102 der quer verlaufenden Förderschnecke 76 zugeführt, die das Erntegut gemäß Pfeilrichtung 104 dem Vertikalförderer 92 zuführt, über die das Erntegut nach außen in einen Ladewagen abgegeben werden kann.

**Patentansprüche**

1. Fördervorrichtung für den Sammelbehälter (28) einer Erntebergungsmaschine, insbesondere Mähdrescher (10), mit mehreren mittels einer Antriebsvorrichtung (80) antreibbaren, unmittelbar über dem Boden (40) des Sammelbehälters (28) angeordneten Förderschnecken (56, 58, 76), von denen zumindest zwei Förderschnecken (56, 58) parallel zueinander verlaufen und mindestens eine Förderschnecke (76) quer zu den parallel verlaufenden Förderschnecken angeordnet und mit einer der parallel verlaufenden Förderschnecken über ein Getriebegehäuse (62) antriebsverbunden ist, dadurch gekennzeichnet, daß jede einzelne der parallel verlaufenden Förderschnecken (56, 58) endseitig über Kegelräder (70, 72) mit der quer verlaufenden Förderschnecke (76) antriebsverbunden ist und sich über je ein Getriebegehäuse (62, 64) auf der quer verlaufenden Förderschnecke (76) abstützt, wobei die Getriebegehäuse (62, 64) auf der quer verlaufenden Förderschnecke (76) angeordnet sein können und nur eine der Förderschnecken (56, 58, 76) mit der Antriebsvorrichtung (80) versehen ist.

2. Fördervorrichtung nach Anspruch 1, dadurch gekennzeichnet, daß die parallel zueinander verlaufenden Förderschnecken (56, 58) in Mulden (46, 48) des Bodens (40) des Sammelbehälters (28) aufgenommen sind, wobei die quer verlaufende Förderschnecke (76) jeweils endseitig in den Seitenwänden (32, 34) gelagert und mit einer weiteren Entleerungsvorrichtung (30, Vertikalförderer 92) antriebsverbindbar sein kann.

3. Fördervorrichtung nach Anspruch 2, dadurch gekennzeichnet, daß die mit der Entleerungsvorrichtung (30, Vertikalförderer 92) verbundene Förderschnecke (76) zur Aufnahme der Getriebegehäuse (62, 64) geteilt oder einstückig ausgebildet ist.

4. Fördervorrichtung nach einem oder mehreren der vorherigen Ansprüche, dadurch gekennzeichnet, daß die mit der Entleerungsvorrichtung (30) verbundene Förderschnecke (76) eine Antriebsscheibe (80) zum Antrieb aller Förderschnecken (56, 58, 76) und der Entleerungsvorrichtung (30) aufweist.

5. Fördervorrichtung nach einem oder mehreren der vorherigen Ansprüche, dadurch gekennzeichnet, daß das Getriebegehäuse (62 bzw. 64) aus zwei zusammenfügbaren Gehäuseteilen gebildet ist und zumindest ein Gehäuseteil über Streben (82) mit dem Boden (40) bzw. den Wänden (36) des Sammelbehälters (28) lösbar verbunden ist.

**Revendications**

1. Dispositif transporteur pour le réservoir collecteur (28) d'une machine de récolte, en particulier d'une moissonneuse-batteuse (10), comportant plusieurs vis transporteuses (56, 58, 76) pouvant être entraînées au moyen d'un dispositif d'entraînement (80), disposées directement au-dessus du fond (40) du réservoir (28), dont deux vis transporteuses au moins (56, 58) s'étendent parallèlement l'une à l'autre et au moins une vis transporteuse (76) est disposée transversalement aux vis transporteuses s'étendant parallèlement et est reliée cinématiquement à l'une des vis transporteuses s'étendant parallèlement par l'intermédiaire d'un carter de transmission (62), caractérisé en ce que chaque vis transporteuse individuelle parmi les vis transporteuses (56, 58) s'étendant parallèlement est reliée cinématiquement en bout par des pignons coniques (70, 72) à la vis transporteuse (76) s'étendant transversalement et s'appuie par un carter de transmission respectif (62, 64) sur la vis transporteuse s'étendant tranversalement (76), les carters de transmission (62, 64) pouvant être placés sur la vis transporteuse (76) s'étendant tranversalement et une seule des vis transporteuses (56, 58, 76) comportant le dispositif d'entraînement (80).

2. Dispositif transporteur selon la revendication 1, caractérisé en ce que les vis transporteuses (56, 58) s'étendant parallèlement l'une à l'autre sont logées dans des dépressions ou cuvettes (46, 48) du fond (40) du réservoir (28), la vis transporteuse s'étendant transversalement (76) étant tourillonnée à chaque extrémité dans les parois latérales (respectivement 32, 34) et pouvant être reliée cinématiquement à un autre dispositif d'évacuation (30, transporteur vertical 92).

3. Dispositif transporteur selon la revendication 2, caractérisé en ce que la vis transporteuse (76) reliée au dispositif d'évacuation (30, transporteur vertical 92) est réalisée en plusieurs parties pour la réception des carters de transmission (62, 64) ou est d'un seul tenant.

4. Dispositif transporteur selon une ou plusieurs des revendications précédentes, caractérisé en ce que la vis transporteuse (76) reliée au dispositif d'évacuation (30) comporte une poulie d'entraînement (80) pour l'entraînement de toutes les vis transporteuses (56, 58, 76) et du dispositif d'évacuation (30).

5. Dispositif transporteur selon une ou plusieurs des revendications précédentes, caractérisé en ce que le carter de transmission (62 ou 64) est formé de deux parties de carter pouvant être assemblées, et en ce qu'au moins une partie de carter est reliée de façon amovible par des contrefiches (82) au fond (40) ou aux parois (36) du réservoir (28).

**Claims**

1. Conveyor device for the collecting container (28) of a harvesting machine, especially a combine harvester (10), with a plurality of conveyor augers (56, 58, 76) arranged directly over the bottom (40) of the collecting container (28), drivable by means of a drive device (80), of which at least two conveyor augers (56, 58) run parallel to one another and at least one conveyor auger (76) is arranged transverse to the parallel running conveyor augers and is drivingly connected to one of the parallel running conveyor augers through a gearbox (62), characterized in that each individual parallel running conveyor auger (56, 58) is drivingly connected at the ends to the transverse running conveyor auger (76) through bevel wheels (70, 72) and is supported by a respective gearbox (62, 64) on the transversely running conveyor auger (76), whereby the gearboxes (62, 64) can be arranged on the transversely running conveyor auger (76) and only one of the conveyor augers (56, 58, 76) is provided with the drive device (80).

2. Conveyor device according to claim 1, characterized in that the mutually parallel running conveyor augers (56, 58) are received in troughs (46, 48) in the bottom (40) of the collecting container (28), wherein the transversely running conveyor auger (76) is mounted at each end in the sidewalls (32, 34) and can be drivingly connected to a further emptying device (30, vertical conveyor (92).

3. Conveyor device according to claim 2, characterized in that the conveyor auger (76) connected to the emptying device (30, vertical conveyor (92) is formed divided or in one piece for the reception of the gearboxes (62, 64).

4. Conveyor device according to one or more of the preceding claims, characterized in that the conveyor auger (76) connected to the emptying device (30) has a drive pulley (80) for the drive of all conveyor augers (56, 58, 76) and the emptying device (30).

5. Conveyor device according to one or more of the preceding claims, characterized in that the gearbox (62 or 64) is formed from two housing parts fitting together and at least one housing part is releasably connected by struts (82) to the bottom (40) or the walls (36) of the collecting container (28).

EP 0 143 108 B1

FIG. 1

FIG. 2

1

FIG. 3